(19) **Europäisches Patentamt**

**European Patent Office**

**Office européen des brevets**

(11) **EP 1 028 548 B1**

(12) **EUROPÄISCHE PATENTSCHRIFT**

(45) Veröffentlichungstag und Bekanntmachung des Hinweises auf die Patenterteilung:
**02.01.2004 Patentblatt 2004/01**

(51) Int Cl.7: **H04B 10/08**, H04B 10/18

(21) Anmeldenummer: **99810108.3**

(22) Anmeldetag: **09.02.1999**

(54) **Prüfung der Qualität eines optischen Übertragungssignals**

Testing of the quality of an optical transmission signal

Contrôle de qualité d'un signal optique de transmission

(84) Benannte Vertragsstaaten:
**AT CH DE ES FR GB IT LI NL SE**

(43) Veröffentlichungstag der Anmeldung:
**16.08.2000 Patentblatt 2000/33**

(73) Patentinhaber: **Swisscom AG**
**3000 Bern 29 (CH)**

(72) Erfinder: **Rapp, Lutz**
**73252 Lenningen (DE)**

(74) Vertreter: **BOVARD AG - Patentanwälte**
**Optingenstrasse 16**
**3000 Bern 25 (CH)**

(56) Entgegenhaltungen:
EP-A- 0 591 961     EP-A- 0 863 626
DE-A- 19 504 896     GB-A- 2 315 938
GB-A- 2 319 419

**Beschreibung**

Die Erfindung betrifft eine Vorrichtung zur Prüfung der Qualität eines Übertragungssignals, das einem über einen Lichtwellenleiter laufenden Trägerstrahl aufmoduliert ist, entsprechend dem Oberbegriff von Anspruch 1. Die Erfindung betrifft ferner ein Verfahren zur Prüfung der Qualität eines solchen Übertragungssignals und die Verwendung der Vorrichtung bzw. des Verfahrens entsprechend dem Oberbegriff der anderen, unabhängigen Ansprüche.

Es sind optische Netze für Kommunikationszwecke und deren Bauelemente bekannt. Bei solchen Netzen konventioneller Bauart arbeiten nur die Übertragungsstrecken optisch, während die Knoten elektrisch aufgebaute Einrichtungen enthalten. Solche Netze benötigen zahlreiche optoelektrische und elektro-optische Wandler, was aufwendig ist. Andererseits ermöglicht diese Technik einen Ausgleich von auf den Übertragungsstrecken entstehenden Signalverzerrungen. Insbesondere bei digitalen Signalen ist eine exakte Signal-Regenerierung möglich.

EP 0 863 626 und DE 19 504 896 offenbaren Prüfeinrichtungen, die zwar einen Prüfstrahl abzweigen und abtasten, diesen jedoch nicht vor der Abtastung und anschließender Auswertung dispergieren.

Es sind ferner diverse Multiplexierungs-Techniken bekannt, durch die mehrere Übertragungskanäle auf einer gemeinsamen Leitung installierbar sind. Explizit genannt seien das Zeitmultiplex-Verfahren (TDM: time division multiplexing) und das Wellenlängen-Multiplex-Verfahren (WDM: wavelength division multiplexing). Diese Techniken erlauben eine mehrfache Ausnützung der vorhandenen Übertragungsleitungen. Dem steht ein erhöhter Aufwand für das Multiplexieren und Demultiplexieren gegenüber. Es besteht ferner die Gefahr unerwünschter Wechselwirkungen zwischen den verschiedenen Multiplex-Kanälen. Zur Verbesserung der allgemeinen Situation wurde normenmässig die sogenannte Synchrone Digitale Hierarchie (SDH) eingeführt, durch die eine Vielzahl von Überwachungsmöglichkeiten in Weitverkehrsnetzen ermöglicht wird.

Es sind weiter die Einflüsse bekannt, die auf optischen Übertragungsstrecken die maximal erreichbaren Reichweiten beeinflussen bzw. begrenzen. Solche Einflüsse sind insbesondere:

- Die Faserdämpfung, welche die optische Leistung exponentiell mit der Streckenlänge reduziert.

- Die chromatische Dispersion (GVD: Group-Velocity Dispersion) und der stochastische Effekt der Polarisationsdispersion (PMD: Polarization Mode Dispersion), welche die Signalformen verändern, ohne dabei die mittlere Leistung pro Übertragungskanal zu beeinflussen.

- Die stimulierte Brillouin-Streuung (SBS), welche bei unidirektionalem Betrieb die Wellen zusätzlich, und zwar nichtlinear, dämpft.

- Die stimulierte Raman-Streuung (SRS), welche einige Lichtwellen zu Lasten anderer, ebenfalls nichtlinear, verstärkt

- Die Selbstphasenmodulation (SPM: Self-Phase Modulation) und die Kreuzphasenmodulation (XPM: Cross-Phase Modulation), welche, wie auch die chromatische Dispersion GVD, die Phase der jeweiligen Lichtwelle verändern, was bei einem Direktempfang (DD: Direct Detection) jedoch keinen direkten Einfluss auf den Signalverlauf hat.

Es sind weiter auch Kriterien bekannt, wie die Qualität bzw. Güte von Übertragungsstrecken quantifizierbar sind. Hierzu ist vor allem die Bitfehlerwahrscheinlichkeit (BER: Bit Error Ratio) zu nennen, die durch Senden und Empfangen eines bekannten Bitmusters, d. h. einer bekannten Folge von "Einsen" und "Nullen", leicht ermittelbar ist. Weiter ist der Q-Faktor zu erwähnen , der mit der Wahrscheinlichkeitsdichte-Funktion des die Signale überlagernden Rauschens zusammenhängt.

Die Publikation von L. Rapp, "Freie Fahrt auf der Datenautobahn", Computerworld, Nr. 22, 25. Mai 1998 gibt einen guten Überblick über die wichtigsten Aspekte zukünftiger, volloptischer Weitverkehrsnetze. Diese Netze stehen demnächst den erwähnten konventionellen, optischen Netzen gegenüber, wobei optische Verstärker die bisherigen elektronischen Verstärker ersetzen.

Weiter sei die Publikation von K. Müller et al, "Application of Amplitude Histograms for Quality of Service Measurements of Optical Channels and Fault Identification", ECOC'98, pp. 707-708, 20.-24. September 1998, Madrid, Spain, genannt. Diese Schrift behandelt eine Methode zum Charakterisieren der Qualität von Übertragungskanälen auf optischen Leitungen. Diese Methode basiert auf der Ermittlung von Amplituden-Histogrammen, die durch asynchrones Abtasten gewonnen werden. Sie erlaubt allerdings nur Angaben über die zu erwartende Bitfehlerwahrscheinlichkeit, die erzielbar wäre, wenn sich der Empfänger am Ort der Messung befände: Für die Lokalisierung von Fehlerquellen ist die Methode jedoch kaum geeignet.

Insgesamt zeigt sich, dass mit den Methoden des dargelegten Standes der Technik eine einwandfreie Überwachung der Qualität optischer Netze kaum möglich ist. Insbesondere sind die Einflüsse von Selbstphasenund Kreuzphasenmodulationen kaum zu erfassen. Damit bleiben solche Einflüsse leicht unbemerkt und können damit sehr heimtückische Störquellen bilden. Dies kann in volloptischen Netzen (aber auch auf Punkt-zu-Punkt-Verbindungen) zu echten Problemen führen. Zu diesem Aspekt wird auf die Publikation von L. Rapp, "Distortion of SCM Signals due to cross-phase modulation in transparent optical networks", Proc. Workshop on All-Optical Networks, Zagreb, Kroatien, S. 143 - 151, 6. bis 8. Mai 1998, hingewiesen. Weiter ergibt sich aus dem Stand der Technik und der Existenz der genannten, nicht erfassbaren Störquellen, dass eine systematische Fehlersuche beim Auftreten von Störungen kaum möglich ist.

Der vorliegenden Erfindung liegt die Aufgabe zugrunde, eine Vorrichtung bzw. ein verbessertes Verfahren anzugeben, mit deren Hilfe eine möglichst vollständige und zuverlässige Prüfung von optisch über beliebige Lichtwellenleiter übertragenen Signalen durchführbar ist. Hierdurch soll die Signalqualität in beliebigen optischen Netzen, insbesondere auch in volloptischen Netzen, einwandfrei und umfassend überwachbar werden. Diese Vorrichtung bzw. dieses Verfahren sollen so geartet sein, dass im Falle von Störungen die Fehlerstellen im Netz rasch und sicher lokalisierbar sind.

Die erfindungsgemässe Lösung dieser Aufgabe wird durch die unabhängigen Patentansprüche definiert. Die abhängigen Patentansprüche geben bevorzugte Ausgestaltungen der Erfindung an.

Die erfindungsgemässe Vorrichtung bzw. das erfindungsgemässe Verfahren zur Prüfung der Qualität von Übertragungssignalen auf Faserleitungen in volloptischen Netzen ist relativ einfach und erlaubt eine quantitative Erfassung sämtlicher bekannter Verzerrungsarten, insbesondere auch von Verzerrungen, die auf induzierten Phasenänderungen beruhen. Diese Erfassung ist sowohl bei digitalen als auch bei analogen Signalen möglich, so dass das volloptische Netz für alle Netzteilnehmer transparent betreibbar ist. Hierauf lässt sich daher ein netzweites Überwachungssystem aufbauen, mit dessen Hilfe quantifizierende Werte bereitgestellt werden können für Langzeituntersuchungen, Bewertungen, Vergleiche, usw.

Ausführungsbeispiele der Erfindung werden nachstehend anhand der folgenden Figuren näher beschrieben.

Es zeigen:

Figur 1 Schematischer Aufbau eines volloptischen Kommunikationsnetzes,

Figuren 2-4 Augendiagramme,

Figuren 5-8 Blockschaltbilder von Prüfvorrichtungen für optische Signale.

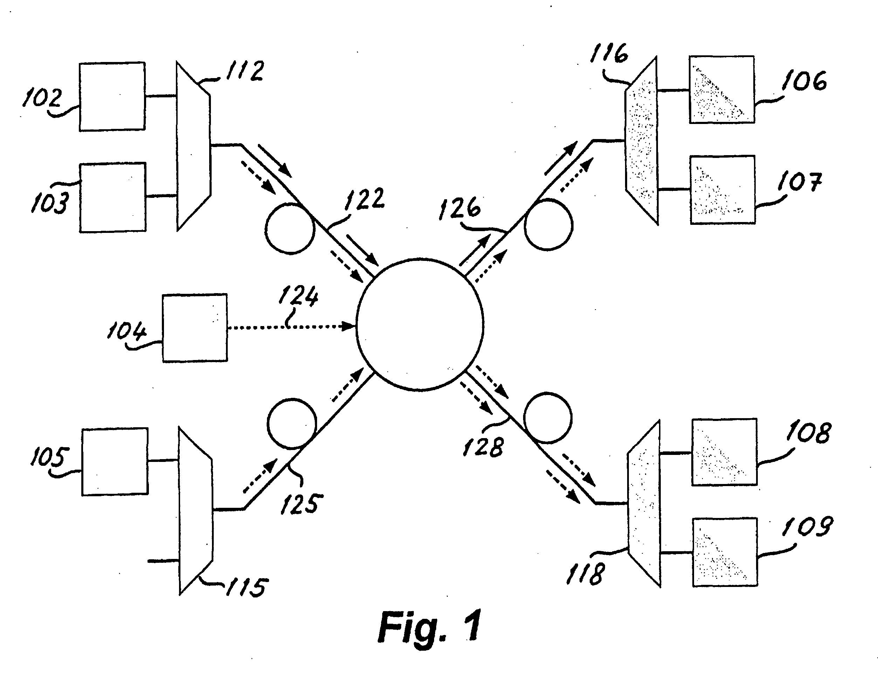

Figur 1 zeigt schematisch und als Beispiel den Aufbau eines sehr einfachen, volloptischen Kommunikationsnetzes 101 für den Weitverkehr zwischen beispielsweise fünf verschiedenen Regionen. Gezeigt sind insgesamt vier verschiedene Sender 102 bis 105 (Tx: transmitter) von einer grösseren Mehrzahl von Sendern und vier verschiedene Empfänger 106 bis 109 (Rx: receiver) von einer ebenfalls grösseren Anzahl von Empfängern. Die Sender 102, 103 und 105 sind über regionale Multiplexer 112 bzw. 115 mit abgehenden Leitungen 122 bzw. 125 verbunden, der Sender 104 direkt mit einer abgehenden Leitung 124. Die Empfänger 106, 107 und 108, 109 sind entsprechend über regionale Demultiplexer 116 bzw. 118 mit ankommenden Leitungen 126 bzw. 128 verbunden. Die abgehenden 122, 124, 125 und die ankommenden Leitungen 126, 128 sind über eine optische Schalteinheit 119 (OXC: optical cross connect) beliebig miteinander verbindbar.

Der Begriff "volloptisch" für das Netz 101 bedeutet, dass ausser den Sendern 102 bis 105 und den Empfängern 106 bis 109 alle anderen Elemente rein optisch funktionieren; insbesondere arbeiten notwendige Verstärker als optische Verstärker, die den jeweiligen eingangsseitigen Signalpegel wieder anheben. Desgleichen funktioniert die optische Schalteinheit 119 rein optisch. Weiter können Wellenlängenkonverter im Netz vorhanden sein. Dies bedeutet, dass im eigentlichen Netz keine optoelektrischen oder elektro-optischen Wandler vorhanden sind.

Die Leitungen 122, 124, 125, 126, 128 sind optische Faserleitungen, bevorzugt Einmoden-Fasern. Als Beispiel haben die Leitungen 122 und 125 je eine Länge von 90 km und sind dispersionsverschoben (DSF: dispersion shifted fiber). Die Leitung 124 ist relativ kurz und bewirkt keine Signalverzerrungen. Die Leitungen 126, 128 bestehen aus Standardfasern (SSMF: standard single mode fiber) und haben jeweils eine Länge von 50 km. Die Signalleistung auf diesen ankommenden Leitungen 126, 128 wird als so gering angenommen, dass eventuell auftretende nichtlineare Effekte vernachlässigbar bleiben.

Als Signalträger dienen auf der Leitung 122 zwei Trägerstrahlen unterschiedlicher Frequenzen, die mit "blau" (durchgezogene Pfeile) und "rot" (gestrichelte Pfeile) bezeichnet seien. Diese Trägerstrahlen sind zur Übermittlung von Signalen beliebig moduliert, beispielsweise intensitätsmoduliert und digital mit vorgegebenem Takt. Auf der Leitung 125 dienen zwei Trägerstrahlen mit weiteren Frequenzen als Signalträger, von denen nur der Trägerstrahl "grün" (strichpunktierte Pfeile) gezeigt ist. Auf der Leitung 124 wird schliesslich ein fünfter Trägerstrahl "gelb" (punktierte Pfeile) verwendet.

Die Signalträger und die angeordneten Signale passieren weitgehend unabhängig voneinander die Schalteinheit 119. Der "rote" und "grüne" Strahl erreichen über Leitung 128 den Demultiplexer 118, der "blaue" und "gelbe" Strahl über die Leitung 126 den Demultiplexer 116.

Zur Klarstellung sei betont, dass unter dem Begriff "Strahl" hier jeglicher optische Transportmechanismus zu verstehen ist, der auf einem beliebigen, optischen Übertragungsmedium einsetzbar ist, insbesondere auf einem Lichtwellenleiter in der Form einer Einmoden-Lichtleitfaser. Die Farbbezeichnungen "rot", "blau" usw. dienen als optische Wellenlängen- bzw. Frequenz-Angaben für den jeweiligen Strahl. Im betrachteten, beispielhaften Netz 101 liegen alle Wellenlängen im dritten Übertragungsfenster bei 1550 mm. Die Strahlen selbst sind zum Zwecke der Informations- bzw. SignalÜbertragung moduliert, wobei die Art der Modulation beliebig sein kann, insbesondere digital oder analog.

Insbesondere auf den langen, abgehenden Leitungen 122, 125 treten wegen der notwendigen erheblichen Sendeleistungen auf den Strahlen nichtlineare Effekte auf. Auf der Leitung 122 beruhen diese auf Phasenänderungen der Signale durch Selbstphasenmodulation (SPM) und Kreuzphasenmodulation (XPM) zwischen den beiden aktiven Strahlen "rot" und "blau". Auf der Leitung 125 tritt nur eine Selbstphasenmodulation (SPM) auf, da nur der "grüne" Strahl aktiv ist.

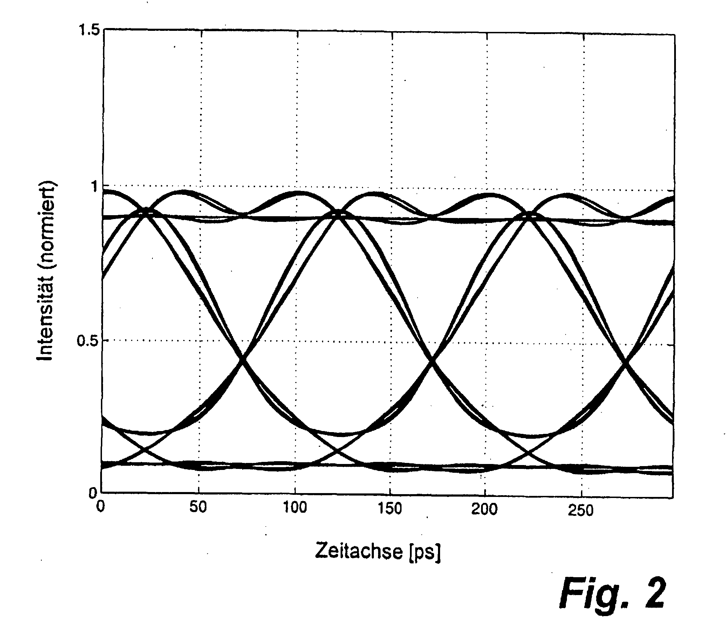

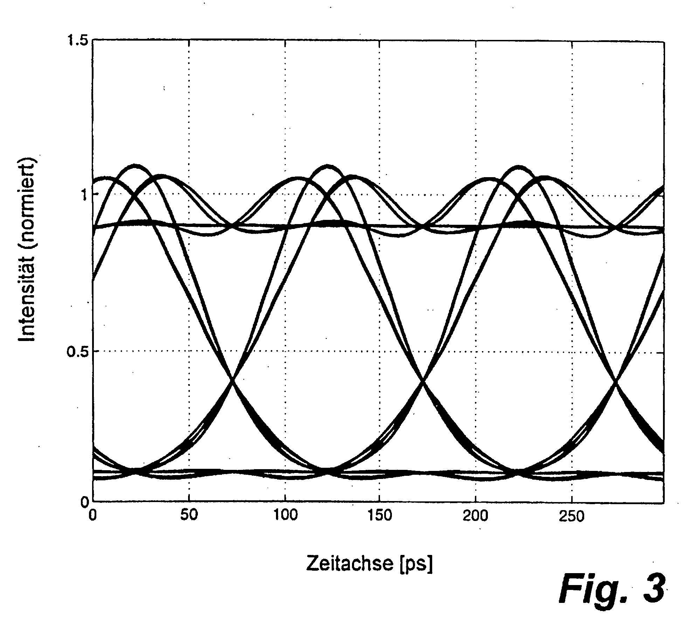

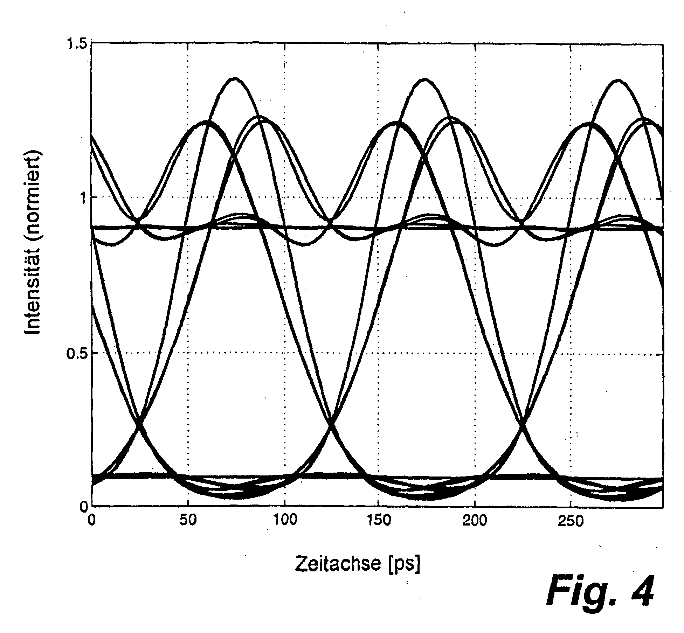

Durch alle Wechselwirkungen und Effekte im Netz 101 insgesamt ergeben sich an den Empfängern 106 bis 109 unterschiedliche und im allgemeinen ständig wechselnde Signalverzerrungen, die für digitale Signale durch sogenannte Augendiagramme sichtbar gemacht werden können. Die Figuren 2, 3, 4 zeigen Beispiele von Augendiagrammen, welche den Empfängern 107, 108 bzw. 109 in Fig. 1 zugeordnet sind, wobei das Augendiagramm gemäss Fig. 2 dem Empfänger 107, das Augendiagramm gemäss Fig. 3 dem Empfänger 108 und das Augendiagramm gemäss Fig. 4 dem Empfänger 109 zugeordnet ist. Die Unterschiede sind offensichtlich und repräsentieren unterschiedliche Signal-Qualitäten, die wiederum unterschiedliche Bitfehlerwahrscheinlichkeiten (BER: bit error ratio) bedingen.

Die gezeigten Unterschiede sind auf den unterschiedlichen Einfluss nichtlinearer Effekte auf den Leitungen 122, 124 und 125 zurückzuführen. Durch Messungen können diese Störeinflüsse aber nur lokalisiert werden, wenn an den Eingängen oder Ausgängen der optischen Schalteinheit 119 registriert wird, dass relevante Lichtwellenparameter, in diesem Falle die Phase, unterschiedlich stark verändert wurden. Mit Hilfe der bekannten Verfahren, d.h. Verfahren des Standes der Technik, sind jedoch an diesen Stellen keine Unterschiede auszumachen. Die Störquellen werden daher fälschlicherweise bei den nachfolgenden Leitungen 126 und 128 vermutet.

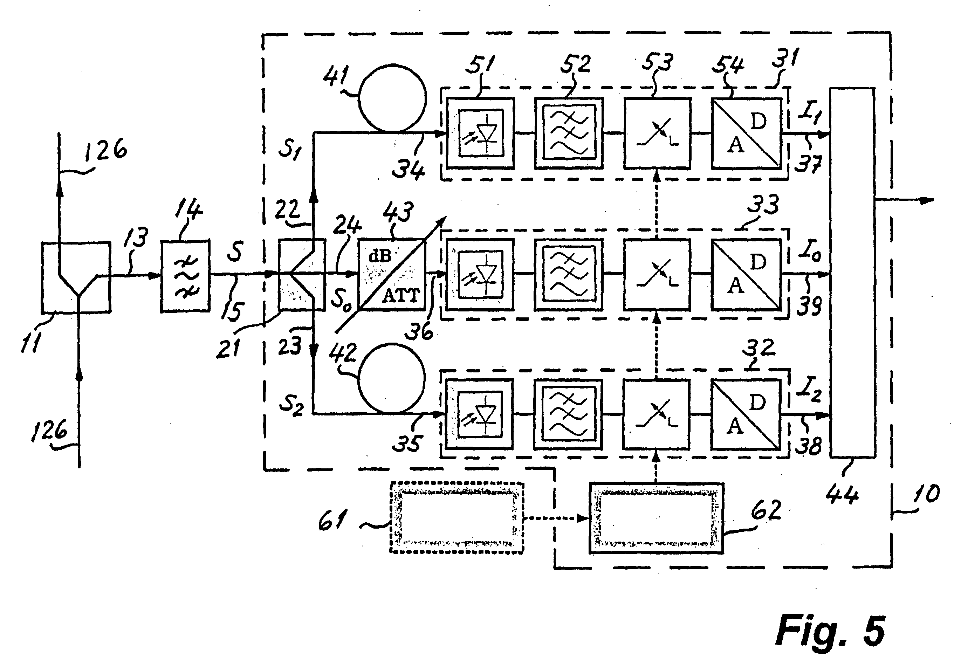

Figur 5 zeigt ein Blockschaltbild einer Prüfvorrichtung 10 zur Qualitätsbeurteilung von Signalen, die beispielsweise in einem volloptischen Netz 101 über beliebige Wege übertragen werden. Diese Prüfvorrichtung 10 soll beispielsweise direkt hinter der optischen Schalteinheit 119 (Fig. 1) in die Leitung 126 eingefügt sein. Das Einfügen erfolgt mittels eines Strahlteilers 11, der einen geringen Anteil von dem auf der Leitung 126 vorhandenen Trägerstrahl auf den Abzweig 13 ableitet, z.B. 1 % seiner Leistung. Der abgezweigte Teilstrahl durchläuft ein Filter 14, das die nicht gewünschten Anteile herausfiltert, beispielsweise den "gelben" (punktierte Pfeile) Trägerstrahl (entsprechend Fig. 1), so dass allein der "blaue" (durchgezogene Pfeile) Prüfstrahl S für die Prüfung übrig bleibt.

Die Prüfvorrichtung 10 in der gezeigten Ausgestaltung umfasst einen (weiteren) Strahlteiler 21 mit drei Ausgängen 22, 23, 24 zum gleichteiligen Aufteilen des Prüfstrahles S, drei gleich aufgebaute Empfänger 31, 32, 33, zwei unterschiedliche Übertragungselemente 41, 42, ein Dämpfungsglied 43, eine Logikschaltung 62 zum Steuern der Empfänger 31, 32, 33 und einen den Ausgängen 37, 38, 39 der Empfänger 31, 32, 33 nachgeschalteten Auswerterechner 44. Hierzu kann ergänzend für digitale Signale eine Taktrückgewinnungseinheit 61 kommen.

Das Übertragungselement 41 ist zwischen den ersten Ausgang 22 des Strahlteilers 21 und den Eingang 34 des ersten Empfängers 31 geschaltet. Das Element 41 ist beispielsweise eine Faser mit anormaler Dispersion. Dies bedeutet, dass der für die Verzerrung der Signale verantwortliche zweite Term der Taylor-Reihe der Ausbreitungskonstante $\beta$ der Trägerfrequenz kleiner Null ist ($\beta_2 < 0$). Hierdurch bewirkt das Übertragungselement 41 gezielt eine (erste) Signalverzerrung des durchlaufenden, jeweiligen Strahls $S_1$.

Das zweite Übertragungselement 42 ist zwischen den zweiten Ausgang 23 des Strahlteilers 21 und den Eingang 35 des zweiten Empfängers 32 geschaltet. Das Element 42 ist ebenfalls eine Faser, jedoch mit normaler Dispersion ($\beta_2 > 0$). Damit bewirkt das Element 42 gezielt eine zweite, anders geartete Signalverzerrung des durchlaufenden, jeweiligen Strahls $S_2$. Bevorzugt wird dabei verlangt, dass die Gesamtdispersion durch die beiden Übertragungselemente 41 und 42 die gleichen Werte annehmen.

Die Übertragungselemente 41, 42, ausgebildet als Fasern, weisen neben den beschriebenen, unterschiedlichen Dispersionen jeweils auch eine Dämpfung auf. Aus diesem Grund ist zwischen den dritten Ausgang 24 des Strahlteilers 21 und den Eingang 36 des dritten Empfängers 33 das Dämpfungsglied 43 geschaltet. Dieses schwächt die Intensität des durchlaufenden, jeweiligen Strahls $S_0$ um einen einstellbaren Betrag, insbesondere gleich stark wie die beiden Fasern 41, 42. Hierdurch wird bewirkt, dass die Teilstrahlen $S_1$, $S_2$, $S_0$ weitgehend gleich stark gedämpft werden. Durch weitere Dämpfungsglieder in den Pfaden der Teilstrahlen $S_1$ und/oder $S_2$ kann dies notfalls exakt sichergestellt werden. Das Dämpfungsglied 43 bewirkt keine Dispersion des Signals und erzeugt damit keine Signalverzerrung.

Die gleich aufgebauten Empfänger 31, 32, 33 weisen jeweils einen optoelektrischen Wandler 51 auf, insbesondere eine Fotodiode, wahlweise ein Tiefpassfilter 52, einen Signalabtaster 53 und einen Analog-/Digital-Wandler 54. Diese Einheiten sind in Serie geschaltet. Das Tiefpassfilter 52 ist nicht zwingend und kann somit weggelassen werden; auch andere Empfänger-Variationen sind denkbar.

Der den Empfängerausgängen 37, 38, 39 nachgeschaltete Auswerterechner 44 ist eine digital arbeitende Computereinheit beliebiger Bauart. Die Logikeinheit 62 ist eine Steuerungsvorrichtung zum beliebigen Durchschalten der Signalabtaster 53. Die Abtastung erfolgt bei digitalen Signalen bevorzugt synchron zum Signaltakt. Liegt dieser nicht vor, kann die Abtastung aber auch asynchron erfolgen.

Durch das asynchrone Abtasten ist die Prüfvorrichtung 10 sowohl für digitale als auch für analoge Signale geeignet. Hierdurch wird der genannten Transparenz des Kommunikationsnetzes 101 bezüglich der eingesetzten Bitraten und der Modulationsarten Rechnung getragen. Liegen digitale Signale vor, dann kann mit Hilfe der Taktrückgewinnungseinheit 61 stichprobenartig zu den potentiellen Signalabtastzeitpunkten bei den Empfängern 106 bis 109 gearbeitet werden. Der Takt für diese Stichproben kann dann wesentlich langsamer sein als die Taktfrequenz des Signals. Allerdings ist dafür zu sorgen, dass bei den Empfängern 31, 32, 33 die jeweiligen Gruppenlaufzeiten alle gleich sind.

Die bisher beschriebene Prüfvorrichtung 10 arbeitet wie folgt: Der vom Filter 14 herkommende Prüfstrahl S wird durch den Strahlteiler 21 in drei Teilstrahlen $S_1$, $S_2$, $S_0$ jeweils etwa gleicher Intensität und sonstiger Eigenschaften aufgeteilt. Diese Teilstrahlen durchlaufen das Übertragungselement 41, das Übertragungselement 42 bzw. das Dämpfungsglied 43. Hierbei werden sie gezielt unterschiedlich verzerrt bzw. nicht verzerrt.

Durch die Empfänger 31, 32, 33 wird aus den Teilstrahlen $S_1$, $S_2$, $S_0$ eine Folge zugeordneter, elektrischer Intensitätssignale $I_1$, $I_2$, $I_0$ gewonnen. Hierzu werden die an den Eingängen 34, 35, 36 ankommenden Teilstrahlen mit Hilfe der optoelektrischen Wandler 51 in proportionale elektrische Ströme bzw. Spannungen gewandelt. Nach dem Eliminieren eventuell vorhandener Störfrequenzen durch die Filter 52 werden die Ströme bzw. Spannungen durch die Signalabtaster 53 impulsmässig abgetastet, wobei jeder Puls wesentlich kürzer ist als die Länge eines Bits bei digitalen Signalen. Das Integral der jeweiligen Ladungsmenge wird dann nach Analog/Digital-Wandlung durch die Wandler 54 an den Ausgängen 37, 38, 39 als Digitalwerte der jeweiligen Strahlintensität $I_1$, $I_2$, $I_0$ zu den zugehörigen Abtastzeitpunkten ausgegeben.

Der Auswerterechner 44 ermittelt aus den jeweils drei zeitlich zusammengehörenden Intensitätswerten $I_1$, $I_2$, $I_0$ jeweils zwei Grössen als Mass für die Qualität der Signalübertragung an der Stelle des Strahlteilers 11. Diese Grössen sind bevorzugt:

$$2B = \ln(I_1/I_0) - \ln(I_2/I_0)$$

und

$$2A = \ln(I_1/I_0) + \ln(I_2/I_0).$$

Mathematisch bzw. theoretisch ergeben sich diese Grössen aus den physikalischen Gegebenheiten der Lichtwellen-Ausbreitung in den unterschiedlichen Medien der Übertragungselemente 41, 42, des Dämpfungsgliedes 43, und unter den bereits genannten Einschränkungen der Prüfvorrichtung von Figur 5 wie Gleichheit der Teilstrahlen $S_1$, $S_2$, $S_0$, usw.

Die Differenz-Grösse 2B kennzeichnet den Einfluss der bereits im Prüfstrahl S am Eingang 15 der Prüfvorrichtung 10 vorhandenen Phasenänderungen. Diese Phasenänderungen können vom Modulator des jeweils zugeordneten Senders (102 im Beispiel von Fig. 1) herrühren oder von Nichtlinearitäten auf den bereits durchlaufenen Übertragungsleitungen, d.h. der Leitung 122 (im Beispiel von Fig. 1). Die Summen-Grösse 2A liefert hingegen Aussagen über die "Anfälligkeit" der an der Stelle des Strahlteilers 11 vorliegenden Signalform gegenüber dispersionsbedingten Verzerrungen auf weiteren, noch zu durchlaufenden Leitungen. Die Prüfvorrichtung 10 ermöglicht damit die Ermittlung von Prüfgrössen über die Qualität der Übertragungssignale an beliebigen Stellen eines optischen Übertragungsnetzes (101), insbesondere auch im Bereich von Schalteinheiten 119. Mit früheren, bekannten Methoden war dies bisher nicht möglich.

Es ist nun sinnvoll, durch laufend wiederholte Messungen eine Datensammlung für die Signalqualitäten am jeweiligen Messort zu gewinnen. Diese Sammlung ermöglicht Aussagen über die Statistik von Signalverzerrungen, über schleichende Veränderungen auf den zugeordneten Übertragungsleitungen, den optischen Schalteinheiten 119 usw. Weiter lässt sich durch den koordinierten Einsatz mehrerer, über das ganze Netz 101 geeignet verteilter Prüfvorrichtungen 10 dieses Netz vorübergehend oder auch dauernd überwachen. Durch eine computergestützte Managementanordnung lassen sich die Prüfvorrichtungen 10 ganz oder teilweise so zusammenfassen, dass die bei diesen (10) anfallenden Prüfgrössen als Daten zentral verwalt- und auswertbar sind. Hiermit lassen sich beispielsweise statistische Angaben über das Netzverhalten gewinnen, oder Angaben über schleichende Veränderungen. Im Fall von Störungen oder ungenügendem Verhalten lassen sich weiter durch den gezielten Vergleich der vorhandenen Daten bei bekanntem Aufbau des Netzes 101 die auslösenden Schwach- oder Fehlerstellen schnell eruieren.

Ausser den bereits genannten Variationen des vorstehend beschriebenen Ausführungsbeispiels der Erfindung gibt es eine erhebliche Anzahl weiterer Möglichkeiten von Änderungen, die innerhalb des Erfindungsgedankens liegen. Nachfolgend werden einige dieser Variationen explizit genannt:

- Die Prüfvorrichtung 10 lässt sich in beliebig aufgebauten, optischen Kommunikationsnetzen 101 einsetzen. Solche Netze können eine Mehrzahl von Schalteinheiten 119, eine Vielzahl von Sendern 102 - 105 und Empfängern 106 - 109, und unterschiedliche Arten von Lichtleitfasern aufweisen. Im Minimum kann unter einem solchen Netz 101 aber auch eine einzige Punkt-zu-Punkt-Verbindung verstanden werden. Weiter ist es nicht notwendig, dass das Netz 101 "volloptisch" ist; (einzelne) elektro-optische und/oder optoelektrische Wandler innerhalb des Netzes 101 schaden nicht und haben keinen Einfluss auf die beschriebene Art der Signalqualitäten-Ermittlung.

- Die Übertragungselemente 41, 42 der Prüfvorrichtung 10 wurden anhand von Figur 5 als Fasern mit anormaler Dispersion bzw. mit normaler Dispersion beschrieben. Anstelle dieser Fasern lassen sich auch ähnlich wirkende, andere Elemente einsetzen. Solche Elemente sind beispielsweise dispersionsbehaftete "Chirped Gratings" oder Elemente mit Polarisationsdispersion (PMD). Grundsätzlich kommt es darauf an, eine Frequenzabhängigkeit der Gruppenlaufzeit der Signale zu nutzen, d.h. unterschiedliche chromatische Dispersionen.

Sind die Übertragungselemente 41, 42 Fasern, dann bilden sie mit ihrer jeweiligen Dispersion und Dämpfung die Art und Weise nach, wie die Signale durch die Lichtwellenleiter im Netz 101 abgeschwächt werden und unerwünschte Verzerrungen erleiden. Sind die Übertragungselemente 41, 42 optische Filter, dann ist die Nachbildung der signalverzerrenden Elemente des Netzes nicht so offensichtlich. Sie ist aber durchaus geeignet, die Phase und die Intensität der beeinflussten Signale zu beurteilen.

- Die Prüfvorrichtung 10 wurde anhand von Fig. 5 mit drei Teilstrahlen $S_1$, $S_2$, $S_0$ und drei Empfängern 31 bis 33 beschrieben. Dies ist die bevorzugte Konfiguration, die es erlaubt, die untersuchten Signale vollständig zu charakterisieren.

Es ist nun grundsätzlich möglich, auf einen der Teilstrahlen $S_2$ oder $S_0$ und die zugeordneten Empfänger 32 bzw. 33 zu verzichten. Im Fall des Wegfalls von $S_2$ ergibt sich im Auswerterechner 44 ein Resultat, welches keine Unterscheidung der Verzerrungsursachen "Phasenverlauf" und "zeitlicher Verlauf der Intensität" ermöglicht. Dieses Resultat kann für gewisse Zwecke genügen und Auskunft geben über die Anfälligkeit des untersuchten Signals gegenüber dem Einfluss der chromatischen Dispersion.

Im Fall des Wegfalls von $S_0$ liefert der Vergleich der verbleibenden elektrischen Intensitätswerte $I_1$ und $I_2$ im Auswerterechner 44 weiterhin die Differenzgrösse 2B,

$$2B = \ln(I_1/I_0) - \ln(I_2/I_0) = \ln(I_1/I_2).$$

Hiermit ist weiterhin eine exakte Aussage über den Phasenverlauf möglich. Da jedoch die Summengrösse 2A nicht anfällt, kann nicht beurteilt werden, wie gross die Verzerrungen sind, die nur vom Intensitätsverlauf abhängen.

- Bei einer weiteren Variante können mehr als drei Teilstrahlen $S_1$, $S_2$, $S_0$ verwendet werden (allgemein eine Mehrzahl N). Sinnvoll ist es beispielsweise, in den verschiedenen Signalpfaden Fasern 41, 42 mit unterschiedlichen Werten der Gesamtdispersion einzusetzen. Dies ermöglicht dann die Bereitstellung unterschiedlicher Messbereiche.

- In Figur 5 wurde der Strahlteiler 21 so beschrieben, dass er drei etwa gleich starke Teilstrahlen $S_1$, $S_2$, $S_0$ erzeugt, und dass diese Teilstrahlen jeweils etwa gleich stark gedämpft werden durch die Elemente 41, 42, 43. Bei Erzeugung gezielt ungleich starker Teilstrahlen $S_1$, $S_2$, $S_0$ durch den Strahlteiler 21 können ungleich starke Dämpfungen durch die Elemente 41, 42, 43 ausgeglichen werden; insbesondere kann das Dämpfungsglied 43 eingespart werden, indem der Teilstrahl So wesentlich intensitätsschwächer gemacht wird als die Teilstrahlen $S_1$, $S_2$.

- Mittels rechnerischer Korrekturen lassen sich Unterschiede in der Stärke der Teilstrahlen $S_1$, $S_2$, $S_0$, im Verhalten der Empfänger 31, 32, 33, usw. ausgleichen. Es ist damit möglich, eine physikalisch nicht optimal abgestimmte Prüfvorrichtung für die Gewinnung der gewünschten Prüfgrössen, insbesondere 2A, 2B, rechnerisch zu verbessern. Theoretisch lässt sich sogar mit unterschiedlich aufgebauten Empfängern 31, 32, 33 operieren.

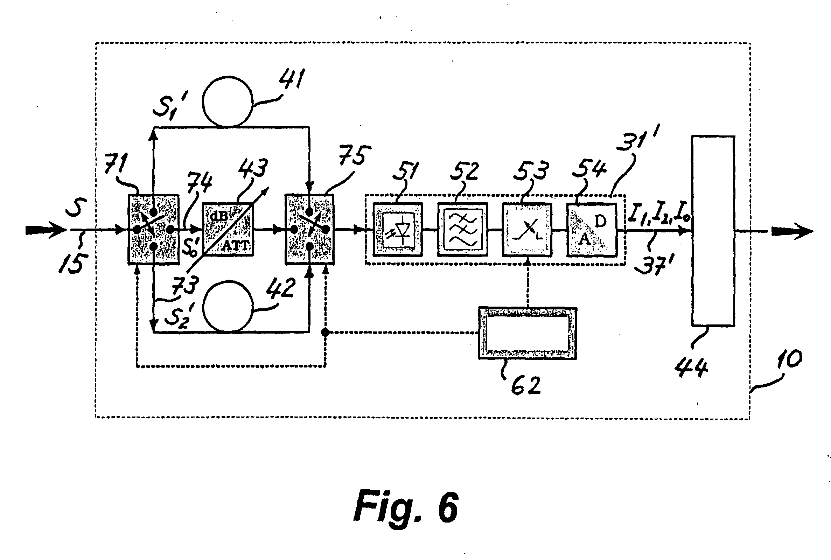

- Während die bisher beschriebenen Varianten alle im wesentlichen auf einer parallelen Verarbeitung der Teilstrahlen $S_1$, $S_2$, $S_0$ entsprechend Fig. 5 basieren, kann die Verarbeitung jedoch grundsätzlich auch seriell erfolgen. Dies wird anhand von Fig. 6 beschrieben: Der Prüfstrahl S wird hierbei nicht geteilt, sondern durch einen ersten optischen Schalter 71 sequentiell, insbesondere zyklisch mit kontinuierlichem Periodentakt, auf die drei Ausgänge 72, 73, 74 geleitet und hierbei in Teilstrahl $S_1'$, $S_2'$ bzw. $S_0'$ umbenannt. Diese Teilstrahlen durchlaufen analog zu Fig. 5 ein erstes Übertragungselement 41 mit anormaler Dispersion, ein zweites Übertragungselement 42 mit normaler Dispersion und ein Dämpfungsglied 43 ohne Dispersionseigenschaften. Hiernach werden sie durch einen zweiten optischen Schalter 75 seriell einem einzigen Empfänger 31' zugeführt, der identisch zu den Empfängern 31, 32, 33 aufgebaut ist. Im Ausgang 37' liegen dann zyklisch die elektrischen Intensitätswerte $I_1$, $I_2$, $I_0$ an, die vom Auswerterechner 44 übernommen werden. Der Empfänger 31' wird durch die Steuereinheit 62 gesteuert, der gleichzeitig auch die synchrone Steuerung der Schalter 71, 75 übernimmt.

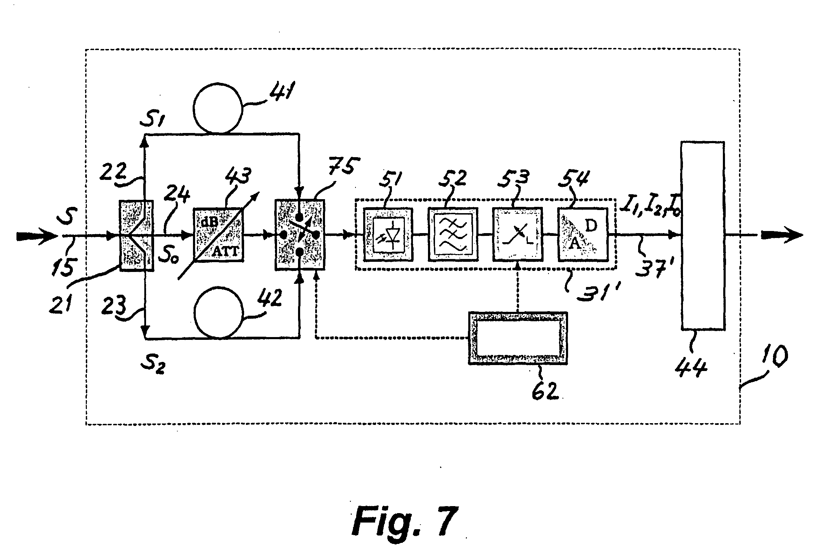

- Fig. 7 zeigt eine Variante des Ausführungsbeispiels gemäss Fig. 6. Der wesentliche Unterschied zwischen beiden Ausführungen besteht darin, dass bei der Variante gemäss Fig. 7 der optische Schalter 71 in der Vorrichtung gemäss Fig. 6 durch einen Strahlteiler 21 ersetzt wird, welcher die gleiche Funktion wie der Strahlteiler 21 in der Vorrichtung gemäss Fig. 5 hat. Ansonsten sind der Aufbau und die Funktionsweise der Variante gemäss Fig. 7 und des Ausführungsbeispiels gemäss Fig. 6 gleich.

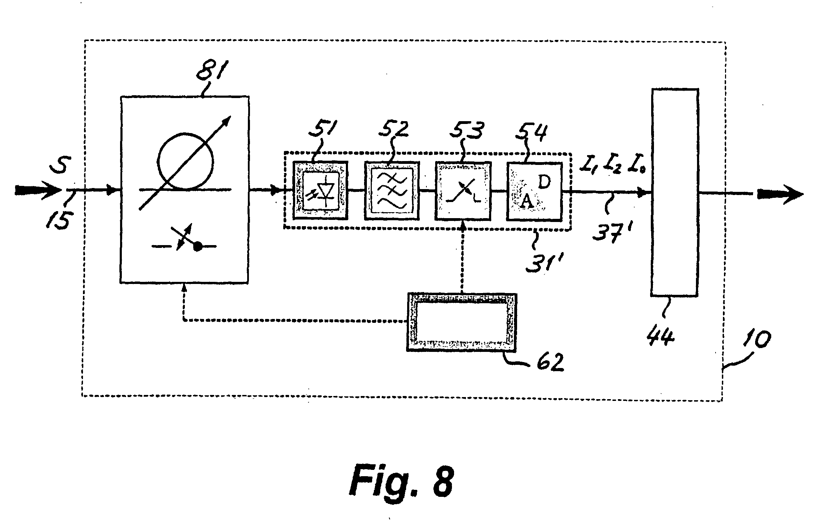

- Fig. 8 zeigt eine weitere Variante mit zyklischer Abtastung. Bei dieser Variante sind die Übertragungselemente 41, 42 und das Dämpfungsglied 43 (Fig. 5 und 6) durch ein in seinen Eigenschaften variierbares Übertragungselement 81 ersetzt. Dies ist durch die Kombination der Symbole für Lichtleitfaser, Einstellbarkeit und Schalter dargestellt. Dieses Übertragungselement 81 kann beispielsweise realisiert sein durch mehrere optische Fasern mit unterschiedlichen Eigenschaften, die beliebig zusammenschaltbar sind und damit dem jeweils durchlaufenden Lichtstrahl S je nach Schaltstellung unterschiedliche Dispersion aufzwingen. Es kann sich aber auch um ein Element handeln, dessen Eigenschaften sich kontinuierlich verändern lassen. Die Steuereinheit 62 steuert das Übertragungselement 81 und den nachgeschalteten Empfänger 31'. An dessen Ausgang 37' sind dann vom Auswerterechner 44 periodisch die der jeweiligen Einstellung des Übertragungselementes 81 zugeordneten, beispielsweise zyklisch auftretenden, elektrischen Intensitätswerte $I_1$, $I_2$, $I_0$ und/oder eventuelle weitere Werte abgreifbar.

Die Erfindung ermöglicht eine einfache und wirkungsvolle Bewertung und Überwachung von optischen Netzen, indem an beliebigen Orten des Netzes quantitative Aussagen über die Qualität der dort vorliegenden Übertragungssignale ermittelbar sind. Hierbei spielt die Art dieser Signale keine Rolle. Die Signale können analog oder digital sein, mit beliebigen Frequenzen Damit ist die erfindungsgemässe Methode in beliebigen optischen, für die Teilnehmer transparenten Netzen möglich. Durch die Möglichkeit der Gewinnung und den Vergleich von Daten über die Signalqualitäten an unterschiedlichen Stellen des Netzes ist im Bedarfsfall eine Lokalisierung von Fehler- oder Schwachstellen des Netzes einfach möglich. Damit ergibt sich ein Verhalten, das weit über dasjenige vorbekannter Methoden mit ähnlicher Zielsetzung hinausgeht.

**Patentansprüche**

1. Vorrichtung zur Prüfung der Qualität eines Übertragungssignals, das einem über einen Lichtwellenleiter (122, 124, 125, 126, 128) laufenden Trägerstrahl aufmoduliert ist,
   wobei auf dem Lichtwellenleiter weitere Trägerstrahlen und/oder Übertragungssignale vorhanden sein können, und
wobei Mittel (11, 14) zum verzerrungsfreien Abzweigen eines Prüfstrahls (S) vom genannten Trägerstrahl vorgesehen sind, **dadurch gekennzeichnet, dass** die Vorrichtung wenigstens folgende Einheiten umfasst,

   (a) erste Mittel zum Gewinnen einer Mehrzahl (N) von Teilstrahlen ($S_1$, $S_2$, $S_0$) aus dem Prüfstrahl (S),

   (b) den ersten Mitteln nachgeschaltete, zweite Mittel zum Verursachen unterschiedlicher Dispersionen in den Teilstrahlen ($S_1$, $S_2$, $S_0$),

   (c) den zweiten Mitteln nachgeschaltete, dritte Mittel zum Abtasten der dispergierten Teilstrahlen ($S_1$, $S_2$, So) zugeordneten, jeweiligen Intensitätswerten ($I_1$, $I_2$, $I_0$),

   (d) einen, den dritten Mitteln nachgeschalteten Auswerterechner (44) zur rechnerischen Verarbeitung der Intensitätswerte ($I_1$, $I_2$, $I_0$) und zur Abgabe wenigstens einer Prüfgrösse als quantitative Angabe über die jeweilige Qualität des jeweiligen Übertragungssignals.

2. Vorrichtung nach Anspruch 1, **dadurch gekennzeichnet, dass** die Mehrzahl (N) zwei, drei oder mehr ist.

3. Vorrichtung nach Anspruch 1, **dadurch gekennzeichnet, dass** die ersten Mittel als Strahlteiler (21) ausgebildet sind, mit einem Eingang (15) und mit einer der Mehrzahl (N) entsprechenden Anzahl von Ausgängen (22, 23, 24), dass die zweiten Mittel als erstes Übertragungselement (41) mit anormaler Dispersion, als zweites Übertragungselement (42) mit normaler Dispersion und/oder als Verbindungsglied (43), das keine Dispersion verursacht, die parallel zueinander angeordnet sind, ausgebildet sind, und dass die dritten Mittel als eine der Mehrzahl (N) entsprechende Anzahl von parallelen Empfängern (31, 32, 33) und eine diesen Empfängern gemeinsam zugeordnete Steuereinheit (62) zum Abtasten der dispergierten Teilstrahlen ($S_1$, $S_2$, $S_0$) und zum Abgeben der Intensitätswerte ($I_1$, $I_2$, $I_0$) ausgebildet sind.

4. Vorrichtung nach Anspruch 1, **dadurch gekennzeichnet, dass** die ersten Mittel als optische Schalter (71, 75) ausgebildet sind mit einer der Mehrzahl (N) entsprechenden Anzahl von Schaltstellungen, dass die zweiten Mittel als erstes Übertragungselement (41) mit anormaler Dispersion, als zweites Übertragungselement (42) mit normaler Dispersion und/oder als Verbindungsglied (43), das keine Dispersion verursacht, ausgebildet sind, und dass die dritten Mittel als ein Empfänger (31') mit zugeordneter Steuereinheit (62) ausgebildet sind zum seriellen Abtasten der dispergierten Teilstrahlen ($S_1$, $S_2$, $S_0$) und zum seriellen Abgeben der Intensitätswerte ($I_1$, $I_2$, $I_0$).

5. Vorrichtung nach Anspruch 1, **dadurch gekennzeichnet, dass** die ersten und die zweiten Mittel als variierbares Übertragungselement (81) ausgebildet sind, das von aussen gesteuert die Einstellung unterschiedlicher Dispersionseigenschaften erlaubt, und dass die dritten Mittel als Empfänger (31') mit zugeordneter Steuereinheit (62) ausgebildet sind zum periodischen Abtasten des jeweils anders dispergierten Teilstrahls ($S_1$, $S_2$, $S_0$) und zum Abgeben der zugeordneten Intensitätswerte ($I_1$, $I_2$, $I_0$).

6. Vorrichtung nach Anspruch 3 oder 4, **dadurch gekennzeichnet, dass** das erste (41) und/oder das zweite Übertragungselement (42) optische Fasern sind.

7. Vorrichtung nach Anspruch 3 oder 4, **dadurch gekennzeichnet, dass** das erste (41) und/oder das zweite Übertragungselement (42) dispersionsbehaftete Chirped-Gratings-Elemente oder Elemente mit Polarisationsdispersion sind.

8. Vorrichtung nach Anspruch 3, **dadurch gekennzeichnet, dass** der Strahlteiler (21) so ausgebildet ist, dass er gleich starke Teilstrahlen ($I_1$, $I_2$, $I_0$) abgibt, dass das erste (41), das zweite Übertragungselement (42) und/oder das Verbindungsglied (43) so ausgebildet sind, dass sie jeweils eine etwa gleich starke Strahldämpfung bewirken, und dass die Empfänger (31, 32, 33) im wesentlichen identisch ausgebildet sind.

9. Vorrichtung nach Anspruch 3, 4 oder 5, **dadurch gekennzeichnet, dass** jeder Empfänger (31, 32, 33) in Serie geschaltet einen optoelektrischen Wandler (51), einen Signalabtaster (53) und einen Analog/Digital-Wandler (54) aufweist.

10. Vorrichtung nach Anspruch 3, 4 oder 5, **dadurch gekennzeichnet, dass** der Steuereinheit (62) eine Taktrückgewinnungseinheit (61) für digitale Signale zugeordnet ist.

11. Verfahren zur Prüfung der Qualität eines Übertragungssignals, das einem über einen Lichtwellenleiter (122, 124, 125, 126, 128) laufenden Trägerstrahl aufmoduliert ist, wobei auf dem Lichtwellenleiter weitere Trägerstrahlen und/oder Übertragungssignale vorhanden sein können, und wobei Mittel (11, 14) zum verzerrungsfreien Abzweigen eines Prüfstrahls (S) vom genannten Trägerstrahl vorgesehen sind, **dadurch gekennzeichnet, dass** das Verfahren wenigstens folgende Schritte umfasst,

(a) Ableiten einer Mehrzahl (N) von Teilstrahlen ($S_1$, $S_2$, $S_0$) vom Prüfstrahl (S),

(b) Behandlung der Teilstrahlen ($S_1$, $S_2$, $S_0$), derart,

- dass ein erster ($S_1$) der Teilstrahlen hierbei einer anormalen Dispersion unterworfen ist, und

- dass wenigstens ein zweiter ($S_2$) und/oder ein dritter ($S_0$) der Teilstrahlen hierbei einer normalen Dispersion bzw. keiner Dispersion unterworfen ist,

(c) gepulstes Abtasten der dispergierten Teilstrahlen ($S_1$, $S_2$, $S_0$) zum Gewinnen von jeweils zugeordneten, gleichartigen, elektrischen Intensitätswerten ($I_1$, $I_2$, $I_0$), und

(d) rechnerisches Ableiten von Prüfgrössen aus den Intensitätswerten ($I_1$, $I_2$, $I_0$) als quantitative Angaben über die jeweilige Qualität des Übertragungssignals.

12. Verfahren nach Anspruch 11, **dadurch gekennzeichnet, dass** die Teilstrahlen ($S_1$, $S_2$, $S_0$) kontinuierlich und parallel zueinander vom Prüfstrahl (S) abgeleitet werden.

13. Verfahren nach Anspruch 11, **dadurch gekennzeichnet, dass** die Teilstrahlen ($S_1$, $S_2$, $S_0$) sequentiell, zyklisch vom Prüfstrahl (S) abgeleitet werden.

14. Verfahren nach Anspruch 11, **dadurch gekennzeichnet, dass** als Mass für die durch Phasenverzerrungen bewirkte, verminderte Qualität des Übertragungssignals eine erste Prüfgrösse

$$2B = \ln(I_1/I_0) - \ln(I_2/I_0)$$

oder

$$2B = \ln(I_1/I_2)$$

berechnet wird.

15. Verfahren nach Anspruch 11, **dadurch gekennzeichnet, dass** als Mass für eine durch Anfälligkeit der Signalform gegenüber dispersionsbedingten Verzerrungen verminderte Qualität des bertra-

gungssignals eine zweite Prüfgrösse

$$2A = \ln(I_1/I_0) + \ln(I_2/I_0)$$

berechnet wird.

16. Verfahren nach Anspruch 11, **dadurch gekennzeichnet, dass** die Berechnung der Prüfgrössen wiederholt durchgeführt wird, und dass aus der Gesamtheit der Ergebniswerte der Berechnungen statistische Angaben über die Signalverzerrungen des Prüfstrahls (S) ermittelt werden.

17. Verfahren nach Anspruch 11, **dadurch gekennzeichnet, dass** die Intensitätswerte ($I_1$, $I_2$, $I_0$) asynchron zum Signaltakt des Prüfstrahls (S) gebildet werden.

18. Verfahren nach Anspruch 11, **dadurch gekennzeichnet, dass** die Intensitätswerte ($I_1$, $I_2$, $I_0$) synchron zum Signaltakt des Prüfstrahls (S) gebildet werden.

19. Verfahren nach Anspruch 17 oder 18, **dadurch gekennzeichnet, dass** die Pulsfolge zur Bildung der Intensitätswerte ($I_1$, $I_2$, $I_0$) wesentlich langsamer ist als die Signalfrequenz des Übertragungssignals.

20. Verfahren nach Anspruch 17 oder 18, **dadurch gekennzeichnet, dass** die Intensitätswerte ($I_1$, $I_2$, $I_0$) so gebildet werden, dass für alle beteiligten Teilstrahlen ($S_1$, $S_2$, $S_0$) die Gruppenlaufzeiten gleich sind.

21. Verwendung einer Vorrichtung und/oder eines Verfahrens zur Prüfung der Qualität eines Übertragungssignals, das einem über einen Lichtwellenleiter (122, 124, 125, 126, 128) laufenden Trägerstrahl aufmoduliert ist, entsprechend einem der vorhergehenden Ansprüche, **gekennzeichnet durch** den Einsatz in einem optischen Kommunikationsnetz (101) zum Überwachen des Einhaltens vorgegebener Qualitätsmerkmale und im Falle des Nicht-Einhaltens dieser Merkmale zum Lokalisieren vorhandener Fehlerstellen.

22. Verwendung nach Anspruch 21, **dadurch gekennzeichnet, dass** das Kommunikationsnetz (101) ein transparentes Weitverkehrsnetz ist, mit Eignung für unterschiedliche Trägerstrahlen und/oder unterschiedliche Modulationsarten.

23. Verwendung nach Anspruch 21, **dadurch gekennzeichnet, dass** im Kommunikationsnetz (101) eine Mehrzahl von Prüfvorrichtungen (10) dauernd oder vorübergehend angeschlossen ist.

24. Verwendung nach Anspruch 23, **dadurch gekennzeichnet, dass** dem Kommunikationsnetz (101) eine computergestützte Managementanordnung zugeordnet ist, an welche zumindest ein Teil der Prüfvorrichtungen (10) so angeschlossen ist, dass die bei diesen anfallenden Prüfgrössen als Daten zentral verwalt- und auswertbar sind.

25. Verwendung nach Anspruch 24, **dadurch gekennzeichnet, dass** die Managementanordnung Daten für langzeitliche Vergleiche bereithält.

26. Verwendung nach Anspruch 24, **dadurch gekennzeichnet, dass** die Managementanordnung ausgebildet ist zur Überprüfung sich beliebig durch das Kommunikationsnetz (101) ziehender Signalpfade.

**Claims**

1. Device for testing the quality of a transmission signal which is modulated upon a carrier beam running over a light wave guide (122, 124, 125, 126, 128), further carrier beams and/or transmission signals being able to be present on the light wave guide, and means (11, 14) being provided for distortion-free branching off of a test beam (S) from said carrier beam, **characterised in that** the device comprises at least the following units,

   (a) first means of obtaining a plurality (N) of partial beams ($S_1$, $S_2$, $S_0$) from the test beam (S),

   (b) second means, connected in series to the first means, for causing differing dispersions in the partial beams ($S_1$, $S_2$, $S_0$),

   (c) third means, connected in series to the second means, for scanning the respective intensity values ($I_1$, $I_2$, $I_0$) associated with the dispersed partial beams ($S_1$, $S_2$, $S_0$),

   (d) an evaluation computer (44), connected in series to the third means, for computational processing of the intensity values ($I_1$, $I_2$, $I_0$) and for delivery of at least one test value as the quantitative indication of the particular quality of the respective transmission signal.

2. Device according to claim 1, **characterised in that** the plurality (N) is two, three or more.

3. Device according to claim 1, **characterised in that** the first means are designed as beam splitters (21) with one input (15) and with a number of outputs (22, 23, 24) corresponding to the plurality (N), **in that** the second means are designed as first transmission element (41) with anomalous dispersion, as second transmission element (42) with normal dispersion and/or as interconnection element (43) which causes no dispersion, which are disposed parallel to one another, and **in that** the third means are designed as a number of parallel receivers (31, 32, 33), corresponding to the plurality (N), and a control unit (62) assigned jointly to these receivers for scanning the dispersed partial beams ($S_1$, $S_2$, $S_0$) and for delivering the intensity values ($I_1$, $I_2$, $I_0$).

4. Device according to claim 1, **characterised in that** the first means are designed as optical switches (71, 75) with a number of switching positions corresponding to the plurality (N), **in that** the second means are designed as first transmission element (41) with anomalous dispersion, as second transmission element (42) with normal dispersion and/or as interconnection element (43) which causes no dispersion, and **in that** the third means are designed as a receiver (31') with associated control unit (62) for serial scanning of the dispersed partial beams ($S_1$, $S_2$, $S_0$) and for serial delivery of the intensity values ($I_1$, $I_2$, $I_0$).

5. Device according to claim 1, **characterised in that** the first and the second means are designed as variable transmission element (81) which permits, controlled from outside, the setting of different dispersion characteristics, and **in that** the third means are designed as receiver (31') with associated control unit (62) for periodic scanning of the partial beam ($S_1$, $S_2$, $S_0$) dispersed differently in each case and for delivery of the associated intensity values ($I_1$, $I_2$, $I_0$).

6. Device according to claim 3 or 4, **characterised in that** the first (41) and/or the second transmission element (42) are optical fibres.

7. Device according to claim 3 or 4, **characterised in that** the first (41) and/or the second transmission element (42) are chirped gratings elements having dispersion or elements with polarisation dispersion.

8. Device according to claim 3, **characterised in that** the beam splitter (21) is designed such that it delivers equally powerful partial beams ($I_1$, $I_2$, $I_0$), **in that** the first (41), the second transmission element (42) and/or the interconnection element (43) are designed such that they each cause an approximately equally powerful beam attenuation, and **in that** the receivers (31, 32, 33) are designed substantially identical.

9. Device according to claim 3, 4 or 5, **characterised in that** each receiver (31, 32, 33) connected in series has an opto-electric converter (51), a signal scanner (53), and an analog/digital converter (54).

10. Device according to claim 3, 4 or 5, **characterised in that** a timing recovery unit (61) for digital signals is associated with the control unit (62).

11. Method for testing the quality of a transmission signal which is modulated upon a carrier beam running over a light wave guide (122, 124, 125, 126, 128), further carrier beams and/or transmission signals being able to be present on the light wave guide, and means (11, 14) being provided for distortion-free branching off of a test beam (S) from said carrier beam, **characterised in that** the method comprises at least the following steps,

   (a) branching off a plurality (N) of partial beams ($S_1$, $S_2$, $S_0$) from the test beam (S),

   (b) treating the partial beams ($S_1$, $S_2$, $S_0$) in such a way

   - that a first ($S_1$) of the partial beams is hereby subjected to an anomalous dispersion, and

   - at least a second (S2) and/or a third ($S_0$) of the partial beams is hereby subjected to a normal dispersion or respectively no dispersion,

   (c) pulsed scanning of the dispersed partial beams ($S_1$, $S_2$, $S_0$) to obtain in each case associated similar electrical intensity values ($I_1$, $I_2$, $I_0$), and

   (d) computational derivation of test values from the intensity values ($I_1$, $I_2$, $I_0$) as the quantitative indication of the particular quality of the transmission signal.

12. Method according to claim 11, **characterised in that** the partial beams ($S_1$, $S_2$, $S_0$) are branched off from the test beam (S) continuously and parallel to one another.

13. Method according to claim 11, **characterised in that** the partial beams ($S_1$, $S_2$, $S_0$) are branched off from the test beam (S) sequentially (and) cyclically.

14. Method according to claim 11, **characterised in that** calculated as a measure of the reduced quality of the transmission signal caused by phase distortions is a first test value

$$2B = \ln(I_1/I_0) - \ln(I_2/I_0)$$

   or

$$2B = \ln(I_1/I_2).$$

**15.** Method according to claim 11, **characterised in that** calculated as a measure of a reduced quality of the transmission signal owing to susceptibility of the signal shape with respect to distortions caused by dispersions is a second test value

$$2A = \ln (I_1/I_0) + \ln (I_2/I_0).$$

**16.** Method according to claim 11, **characterised in that** the calculation of the test values is carried out repeatedly, and **in that** statistical data about the signal distortions of the test beam (S) are established from the totality of the result values of the calculations.

**17.** Method according to claim 11, **characterised in that** the intensity values ($I_1$, $I_2$, $I_0$) are formed asynchronously to the signal timing of the test beam (S).

**18.** Method according to claim 11, **characterised in that** the intensity values ($I_1$, $I_2$, $I_0$) are formed synchronously to the signal timing of the test beam (S).

**19.** Method according to claim 17 or 18, **characterised in that** the pulse sequence for formation of the intensity values ($I_1$, $I_2$, $I_0$) is considerably slower than the signal frequency of the transmission signal.

**20.** Method according to claim 17 or 18, **characterised in that** the intensity values ($I_1$, $I_2$, $I_0$) are formed such that the group delays are the same for all participating partial beams ($S_1$, $S_2$, $S_0$).

**21.** Use of a device and/or of a method for testing the quality of a transmission signal which is modulated upon a carrier beam running over a light wave guide (122, 124, 125, 126, 128), corresponding to one of the preceding claims, **characterised by** use in an optical communication network (101) for monitoring the compliance with predetermined quality features and in the case of non-compliance with these features localisation of existing positions of a fault.

**22.** Use according to claim 21, **characterised in that** the communication network (101) is a transparent long-haul network with suitability for different carrier beams and/or different types of modulation.

**23.** Use according to claim 21, **characterised in that** in the communication network (101) a plurality of test devices (10) are permanently or temporarily connected.

**24.** Use according to claim 23, **characterised in that** associated with the communication network (101) is a computer-aided management configuration to which at least part of the test devices (10) are connected such that the test values accumulating at these devices are able to be administered and evaluated as data centrally.

**25.** Use according to claim 24, **characterised in that** the management configuration has data ready for long-term comparisons.

**26.** Use according to claim 24, **characterised in that** the management configuration is designed to check signal paths passing in any way through the communication network (101).

**Revendications**

**1.** Dispositif pour le contrôle de la qualité d'un signal de transmission qui est modulé sur un rayon porteur présent sur une fibre optique (122, 124, 125, 126, 128),

d'autres rayons porteurs et/ou signaux de transmission pouvant se trouver sur la fibre optique et des moyens (11, 14) étant prévus pour la dérivation sans déformation d'un rayon test (S) provenant dudit rayon porteur, **caractérisé en ce que** le dispositif comporte au moins les unités suivantes :

(a) des premiers moyens pour l'obtention d'un grand nombre (N) de rayons partiels ($S_1$, $S_2$, $S_0$) issus du rayon test (S),

(b) des seconds moyens placés après les premiers moyens pour provoquer des dispersions différentes dans les rayons partiels ($S_1$, $S_2$, $S_0$),

(c) des troisièmes moyens placés après les seconds moyens pour le balayage des valeurs d'intensité ($I_1$, $I_2$, $I_0$) respectives associées aux rayons partiels dispersés ($S_1$, $S_2$, $S_0$),

(d) un calculateur d'analyse (44) placé après les troisièmes moyens pour le traitement de calcul des valeurs d'intensité ($I_1$, $I_2$, $I_0$) et pour la délivrance d'au moins une grandeur test en tant qu'indication quantitative pour la qualité respective du signal de transmission respectif.

**2.** Dispositif selon la revendication 1, **caractérisé en ce que** le grand nombre (N) est deux, trois ou plus.

**3.** Dispositif selon la revendication 1, **caractérisé en ce que** les premiers moyens sont réalisés comme des diviseur de rayon (21) avec une entrée (15) et un nombre correspondant au grand nombre (N) de sorties (22, 23, 24), **en ce que** les seconds moyens sont réalisés comme premier élément de transmission (41) avec une dispersion anormale, en tant que second élément de transmission (42) avec une dispersion normale et/ou comme organe de liaison (43) ne provoquant pas de dispersion, les moyens étant disposés parallèlement entre eux, et **en ce que** les troisièmes moyens sont réalisés comme une unité de commande (62) associée au nombre correspondant au grand nombre (N) de récepteurs parallèles (31, 32, 33) et associée en commun à ces récepteurs pour le balayage des rayons partiels dispersés ($S_1$, $S_2$, $S_0$) et pour la délivrance des valeurs d'intensité ($I_1$, $I_2$, $I_0$).

4.  Dispositif selon la revendication 1, **caractérisé en ce que** les premiers moyens sont réalisés comme des commutateurs optiques (71, 75) avec un nombre correspondant de positions de commutation au grand nombre (N), **en ce que** les seconds moyens sont réalisés comme premier élément de transmission (41) avec une dispersion anormale, en tant que second élément de transmission (42) avec une dispersion normale et/ou comme organe de liaison (43) ne provoquant pas de dispersion, **en ce que** les troisièmes moyens sont réalisés comme un récepteur (31') avec une unité de commande associée (62) pour le balayage sériel des rayons partiels dispersés ($S_1$, $S_2$, $S_0$) et pour la délivrance sérielle des valeurs d'intensités ($I_1$, $I_2$, $I_0$).

5.  Dispositif selon la revendication 1, **caractérisé en ce que** les premiers et seconds moyens sont réalisés comme un élément de transmission variable (81) qui permet par une commande externe le paramétrage de différentes propriétés de dispersion et **en ce que** les troisièmes moyens sont réalisés comme récepteurs (31') avec une unité de commande associée (62) pour le balayage périodique du rayon partiel dispersé autrement ($S_1$, $S_2$, $S_0$) et pour la remise des valeurs d'intensité associées ($I_1$, $I_2$, $I_0$).

6.  Dispositif selon la revendication 3 ou 4, **caractérisé en ce que** le premier (41) et/ou le second élément de transmission (42) sont des fibre optiques.

7.  Dispositif selon la revendication 3 ou 4, **caractérisé en ce que** le premier (41) et/ou le second élément de transmission (42) sont des éléments de réseau chirpé marqués par la dispersion ou des éléments avec une dispersion de polarisation.

8.  Dispositif selon la revendication 3, **caractérisé en ce que** le diviseur de rayon (21) est réalisé de sorte qu'il délivre des rayons partiels d'intensité identiques (($I_1$, $I_2$, $I_0$), **en ce que** le premier, le second élément de transmission (42) et/ou l'organe de liaison (43) sont réalisés de sorte qu'ils provoquent un affaiblissement des rayons approximativement similaires et **en ce que** les récepteurs (31, 32, 33) sont réalisés sensiblement à l'identique.

9.  Dispositif selon la revendication 3, 4 ou 5, **caractérisé en ce que** chaque récepteur (31, 32, 33) est monté en série et présente un convertisseur optoélectrique (51), un scanner à signal (53) et un convertisseur analogique/numérique (54).

10. Dispositif selon la revendication 3, 4 ou 5, **caractérisé en ce que** l'unité de commande (62) est associée à une unité de contrôle de cycle (61).

11. Procédé pour le contrôle de la qualité d'un signal de transmission qui est modulé sur un rayon porteur courant sur une fibre optique (122, 124, 125, 126, 128), d'autres rayons porteurs et/ou signaux de transmission pouvant se trouver sur la fibre optique et des moyens (11, 14) étant prévus pour la dérivation sans déformation d'un rayon test (S) provenant dudit rayon porteur, **caractérisé en ce que** le procédé comporte au moins les étapes suivantes,

    (a) dérivation d'un grand nombre (N) de rayons partiels ($S_1$, $S_2$, $S_0$) provenant du rayon test (S),

    (b) traitement des rayons partiels ($S_1$, $S_2$, $S_0$), de sorte

    -   qu'un premier (Si) rayon partiel soit soumis à une dispersion anormale, et

        qu'au moins un second ($S_2$) et/ou un troisième ($S_3$) rayon partiels soit soumis à une dispersion normale ou à aucune dispersion.

    (c) balayage par impulsion des rayons partiels dispersés ($S_1$, $S_2$, $S_0$) pour l'obtention de valeurs d'intensités électriques, similaires associées ($I_1$, $I_2$, $I_0$), et

    ((d) dérivation par calcul de grandeurs test à partir des valeurs d'intensité ($I_1$, $I_2$, $I_0$) en tant qu'indication quantitative sur la qualité respective du signal de transmission.

12. Procédé selon la revendication 11, **caractérisé en ce que** les rayons partiels ($S_1$, $S_2$, $S_0$) sont dérivés du rayon test (S) en continu et parallèlement entre eux.

13. Procédé selon la revendication 11, **caractérisé en ce que** les rayons partiels ($S_1$, $S_2$, $S_0$) sont dérivés du rayon test (S) séquentiellement, par cycle.

14. Procédé selon la revendication 11, **caractérisé en ce qu'**en tant que mesure pour la qualité diminuée provoquée par la distorsion de phase, du signal de transmission, une première grandeur de test est calculée :

$$2B = \ln(I_1/I_0) - \ln(I_2/I_0)$$

ou

$$2B = \ln(I_1/I_2)$$

**15.** Procédé selon la revendication 11, **caractérisé en ce qu'**en tant que mesure pour une qualité diminuée du signal de transmission par la sensibilité de la forme du signal par rapport aux distorsions causées par la dispersion, il est calculé une seconde grandeur test

$$2A = \ln(I_1/I_0) - \ln(I_2/I_0)$$

**16.** Procédé selon la revendication 11, **caractérisé en ce que** le calcul des grandeurs test est effectué de manière répétée et **en ce qu'**à partir de l'ensemble des valeurs de résultat des calculs, des données statistiques sur les distorsions de signaux du rayon test (S) sont déterminées.

**17.** Procédé selon la revendication 11, **caractérisé en ce que** les valeurs d'intensité ($I_1$, $I_2$, $I_0$) sont formées en asynchrone avec le cycle de signal du rayon test (S).

**18.** Procédé selon la revendication 11, **caractérisé en ce que** les valeurs d'intensité ($I_1$, $I_2$, $I_0$) sont formées en synchrone avec le cycle de signal du rayon test (S).

**19.** Procédé selon la revendication 17 ou 18, **caractérisé en ce que** la suite des impulsions pour la formation des valeurs d'intensité ($I_1$, $I_2$, $I_0$) est sensiblement plus lente que la fréquence du signal de transmission

**20.** Procédé selon la revendication 17 ou 18, **caractérisé en ce que** les valeurs d'intensité ($I_1$, $I_2$, $I_0$) sont réalisées de sorte que les durées de groupes sont les mêmes pour tous les rayons partiels impliqués ($S_1$, $S_2$, $S_0$).

**21.** Utilisation d'un dispositif et/ou d'un procédé pour le contrôle de la qualité d'un signal de transmission qui est modulé sur un rayon porteur présent sur une fibre optique (122, 124, 125, 126, 128), selon l'une des revendications précédentes **caractérisée par** l'emploi dans un réseau de communication optique (101) pour la surveillance du respect des caractéristiques qualitatives prescrites et dans le cas d'un non respect de ces caractéristiques pour la localisation des points d'erreurs existants.

**22.** Utilisation selon la revendication 21, **caractérisée en ce que** le réseau de communication (101) est un réseau de trafic étendu transparent apte à différents rayons porteurs et/ou différents modes de modulation.

**23.** Utilisation selon la revendication 21, **caractérisée en ce que** dans le réseau de communication (101), un grand nombre de dispositifs tests (10) sont raccordés en permanence ou temporairement.

**24.** Utilisations selon la revendication 23, **caractérisée en ce que** le réseau de communication (101) est associé à un dispositif de gestion assisté par ordinateur auquel est au moins raccordée une partie des dispositifs tests (10), et **en ce que** les grandeurs tests obtenues dans ces dispositifs test sont analysables et administrables centralement sous forme de données.

**25.** Utilisation selon la revendication 24, **caractérisée en ce que** le dispositif de gestion des données est disponible pour des comparaisons de longue durée.

**26.** Utilisation selon la revendication 24, **caractérisé en ce que** le dispositif de gestion des données est réalisé pour le contrôle de n'importe quel chemin de signaux traversant le réseau de communication (101).

Fig. 1

*Fig. 2*

Fig. 3

Fig. 4

EP 1 028 548 B1

Fig. 5

EP 1 028 548 B1

Fig. 6

**Fig. 7**

EP 1 028 548 B1

**Fig. 8**

EP 1 028 548 B1